(19) Europäisches Patentamt
European Patent Office
Office européen des brevets

(11) **EP 0 719 427 B1**

(12) **EUROPÄISCHE PATENTSCHRIFT**

(45) Veröffentlichungstag und Bekanntmachung des Hinweises auf die Patenterteilung:
**01.04.1998 Patentblatt 1998/14**

(21) Anmeldenummer: **94928338.6**

(22) Anmeldetag: **13.09.1994**

(51) Int Cl.⁶: **G05B 19/18**, G05B 19/4062

(86) Internationale Anmeldenummer:
**PCT/EP94/03054**

(87) Internationale Veröffentlichungsnummer:
**WO 95/08141 (23.03.1995 Gazette 1995/13)**

(54) **VERFAHREN ZUR ABSTECHKONTROLLE BEI STANGENDREHAUTOMATEN**

PROCESS FOR MONITORING BAR CUTOFF ON AUTOMATIC BAR LATHES

PROCEDE DE SURVEILLANCE DU TRONCONNAGE SUR TOURS AUTOMATIQUES TRAVAILLANT DANS LA BARRE

(84) Benannte Vertragsstaaten:
**CH DE FR GB IT**

(30) Priorität: **13.09.1993 DE 4331033**

(43) Veröffentlichungstag der Anmeldung:
**03.07.1996 Patentblatt 1996/27**

(73) Patentinhaber: **Dr. Johannes Heidenhain GmbH
83301 Traunreut (DE)**

(72) Erfinder: **LENGSFELD, Dieter
D-30900 Wedemark (DE)**

(56) Entgegenhaltungen:
EP-A- 0 308 840     DE-A- 3 640 624
US-A- 5 249 161

• PATENT ABSTRACTS OF JAPAN vol. 15, no. 171 (M-1108) 30. April 1991 & JP,A,03 035 902 (OKUMA MACH WORKS) 15. Februar 1991
• PATENT ABSTRACTS OF JAPAN vol. 9, no. 14 (M-352) 22. Januar 1985 & JP,A,59 161 250 (CITIZEN TOKEI) 12. September 1984

**Beschreibung**

Die Erfindung betrifft ein Verfahren zur Abstechkontrolle bei CNC-gesteuerten Stangendrehautomaten nach dem Oberbegriff des Anspruches 1.

Aus der JP-A 3035902 ist ein Verfahren bekannt, bei dem das Abstechwerkzeug bzw. die Spindel der Werkzeugmaschine vor Schäden geschützt wird, indem bei Beendigung des Abstechvorganges das abgestochene Werkstück entlang eines vorgegebenen Weges von der Spindel entfernt wird.

Bei Abstechvorgängen ist es notwendig, zu kontrollieren, ob durch den Abstechvorgang das Werkstück sauber vom Rohteil abgetrennt wurde. Durch diese Kontrolle werden Maschinenschäden, die durch nicht vollständig abgetrennte Werkstücke entstehen können, vermieden.

Aus der DE-A 36 40 624 ist eine Diagnosevorrichtung bekannt, bei der während der normalen Bearbeitung (Bearbeitung ohne Fehler) eines Werkstückes mit einer Maschine die Änderungen von variablen Betriebsparametern bei bestimmten typischen Positionen der Maschine sowie die für die Änderung erforderliche Reaktionszeit in einem Speicher abgelegt werden. Bei der Bearbeitung von Werkstücken werden jeweils an diesen typischen Positionen die Änderungen der variablen Betriebsparameter sowie die Reaktionszeiten bestimmt und mit den Werten, die bei der normalen Bearbeitung abgespeichert wurden verglichen. Falls die Werte einen vorgegebenen Differenzwert nicht überschreiten, wird die Bearbeitung weiterverfolgt.

Aus der DE-A-36 18 349 ist ein Verfahren zur Überprüfung des Abstechvorganges bei Stangendrehautomaten bekannt, bei dem am Ende eines für den Abstechvorgang vorgegebenen Zeitintervalles Betriebsbedingungen herbeigeführt werden, die bei vollständiger Durchtrennung des Materials an der Abstechstelle eine Relativdrehung der Spindeln gegeneinander bewirken. Bei einer Abweichung der vorgegebenen Relativdrehung der Hauptspindel zur Hilfsspindel von der tatsächliche Relativdrehung wird das Vorhandensein einer Materialbrücke erkannt und ein entsprechendes Fehlersignal ausgegeben.

Der Nachteil dieses Verfahrens liegt darin, daß zur Kontrolle des Abstechvorganges ein separater Prüfvorgang notwendig ist, der den Arbeitsablauf verzögert.

Aufgabe der Erfindung ist es deshalb, ein Verfahren zur Abstechkontrolle anzugeben, bei dem eine Verzögerung des Arbeitsablaufes nicht eintritt und somit die durch die Abstechkontrolle entstehenden Steuerungsnebenzeiten minimiert werden.

Diese Aufgabe wird ausgehend von einem Verfahren nach dem Oberbegriff des Anspruches 1 durch die kennzeichnenden Merkmale des Anspruches 1 gelöst.

Gemäß der Erfindung wird nach Beendigung des Abstechvorganges der abgreifende Schlitten in Richtung eines vorgegebenen Kontrollweges gestartet. In der Zeit der Bewegung des abgreifenden Schlittens entlang des Kontrollweges wird der Schleppfehler, d.h. die Differenz zwischen der Soll- und der Iststellung des abgreifenden Schlittens, überwacht und mit einem Wert des Schleppfehlers, der im Leerlauf, d.h. ohne Werkstück, bestimmt wurde, verglichen. Wird bei dem Vergleich der Schleppfehler eine vorgegebene Differenzschwelle überschritten, d.h. wenn der Schleppfehler, der im Leerlauf bestimmt wurde um einen bestimmten Wert vom Schleppfehler, der während des Kontrollweges ermittelt wurde, abweicht, weist dies darauf hin, daß das Werkstück nicht vollständig vom Rohteil abgetrennt ist und es wird ein Fehlersignal ausgegeben.

Der Vorteil der Erfindung liegt darin, daß für die Kontrolle des Abstechvorganges kein separater Arbeitsablauf notwendig ist, denn nach Beendigung des Abstechvorganges wird die Hilfsspindel mit dem Werkstück in jedem Fall einen Rückzugsweg durchlaufen müssen, um das Werkstück von der Hilfsspindel zu entfernen. Dieser Rückzugsweg dient gleichzeitig als Kontrollweg, der durch das erfindungsgemäße Verfahren überwacht wird.

Eine vorteilhafte Ausgestaltung der Erfindung sieht vor, daß die Schleppfehler im Leerlauf und nach Beendigung des Abstechvorganges während der Beschleunigungsphase des abgreifenden Schlittens bestimmt werden. Dadurch kann bereits sehr schnell erkannt werden, ob der Abstechvorgang erfolgreich war oder ob noch eine Materialbrücke verblieben ist.

Eine andere vorteilhafte Ausgestaltung der Erfindung sieht vor, daß die Schleppfehler während der statischen Phase, d.h. erst nach Beendigung der Beschleunigungsphase des abgreifenden Schlittens, bestimmt werden. Auf diese Weise können engere Grenzen bei der Bestimmung des Schwellwertes gesetzt werden, da während der statischen Phase sich die Unregelmäßigkeiten der Anlaufphase auf das Meßergebnis nicht mehr auswirken.

Eine weitere vorteilhafte Ausgestaltung der Erfindung sieht vor, daß anstelle des Schleppfehlers die Schleppfehlersteigung bestimmt wird. Es werden dann die maximale Schleppfehlersteigung im Leerlauf mit der maximalen Schleppfehlersteigung bei Start des Kontrollweges miteinander verglichen. Wenn ein vorgegebener Schwellwert der Differenz der maximalen Schleppfehlersteigungen überschritten wird, wird erkannt, daß noch eine Materialbrücke vorhanden ist und es wird ein Fehlersignal ausgegeben.

Die Bestimmung der Schleppfehlersteigungen bietet den Vorteil, daß während der Anlaufphase bereits kleinste Materialbrücken erkannt werden können.

Entsprechend einer weiteren vorteilhaften Ausgestaltung der Erfindung wird beim Starten des Kontrollweges nach Beendigung der Beschleunigungsphase eine Momentenreduzierung aktiviert, d.h. die Antriebskraft auf den abgreifenden Schlitten wird vermindert. Wenn sich nach Aktivierung der Momentenreduzierung die Schleppfehlersteigung ändert, wird ein Fehlersignal ausgegeben.

Auf diese Weise entfällt die Referenzmessung im Leerlauf.

Eine weitere Ausgestaltung der Erfindung sieht vor, daß der Kontrollweg in Richtung des Rohteiles durchfahren wird und die Schleppfehlersteigung bzw. der Schleppfehler bestimmt und mit den Leerlaufwerten verglichen wird.

Materialreste am abgestochenen Werkstück können erkannt werden, wenn innerhalb einer Wegstrecke, die der Abstechbreite, also der Breite des Abstechwerkzeuges, entspricht, eine Änderung des Schleppfehlers bzw. der Schleppfehlersteigung auftritt. Auf diese Weise können auch Materialreste, die keine Materialbrücken bilden, erkannt werden.

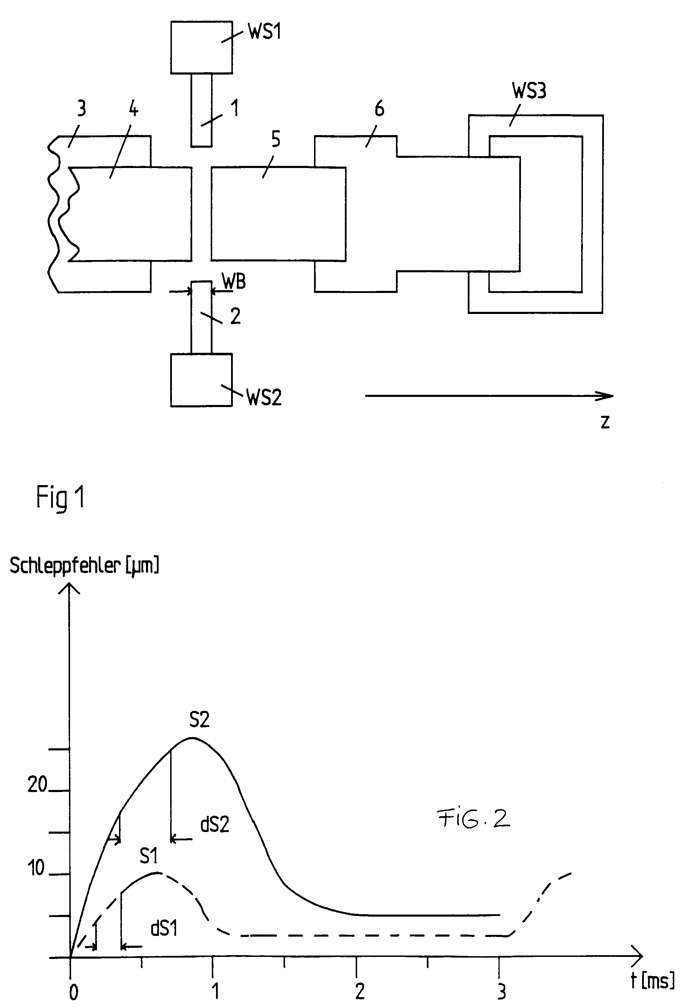

Im folgenden wird die Erfindung an Hand der Figuren 1 und 2 erläutert.
Es zeigen:

Figur 1 eine Abstechvorrichtung, und
Figur 2 ein Diagramm der Schleppfehler im Leerlauf und beim Verfahren des Kontrollweges.

In Figur 1 ist schematisch eine Abstechvorrichtung mit den Abstechmeißeln 1 und 2, die an den Schlitten WS1 und WS2 angebracht sind, dargestellt. Die Abstechvorrichtung enthält weiterhin eine Hauptspindel 3, an der das Rohteil 4 eingespannt ist. An der Hilfsspindel 6 ist das Werkstück 5 befestigt, das vom Rohteil 4 abgestochen wurde. An der Hilfsspindel 6 ist der abgreifende Schlitten WS3 angeordnet.
Beim Abstechvorgang wird mit den Abstechmeißeln 1 und 2 das Werkstück 5 vom Rohteil 4 abgetrennt. Nachdem der Abstechvorgang beendet ist, wird der abgreifende Schlitten S3 mit der Hilfsspindel 6 und dem abgestochenen Werkstück 5 in Richtung der Z-Achse verfahren. Dieser Verfahrweg dient gleichzeitig als Kontrollweg, bei dem der Schleppfehler bzw. die Schleppfehlersteigung bestimmt wird. Der erhaltene Schleppfehler bzw. die Schleppfehlersteigung wird mit einem Wert des Schleppfehlers bzw. der Schleppfehlersteigung verglichen, der zuvor im Leerlauf ermittelt wurde.

Mögliche Schleppfehlerverläufe im Leerlauf und bei Durchlaufen des Kontrollweges sind in Figur 2 dargestellt. Dort ist der Schleppfehler (in µm) in Abhängigkeit von der Zeit t (in ms) dargestellt. Die strichlierte Linie zeigt den Schleppfehler im Leerlauf, die durchgezogene Linie zeigt den Schleppfehler beim Verfahren des Kontrollweges. Die maximalen Schleppfehler sind mit S1 (im Leerlauf) und S2 (beim Durchlaufen des Kontrollweges) bezeichnet. Die maximalen Schleppfehlersteigungen sind beispielhaft mit dS1 und dS2 für den Leerlauf und beim Verfahren des Kontrollweges angegeben.

In Figur 2 ist eine Situation dargestellt, bei der das Werkstück nicht vollständig abgestochen wurde, d.h., daß eine Materialbrücke vorhanden ist, so daß der Schleppfehler S2 größer ist als der Schleppfehler S1 bzw. die maximale Schleppfehlersteigung dS2 größer ist, als die maximale Schleppfehlersteigung dS1.

Bei dem Vergleich der Schleppfehler wird jeweils ein Schwellwert S für den Schleppfehlerunterschied im Leerlauf und beim Verfahren des Kontrollweges festgelegt. Der Schwellwert wird so festgelegt, daß mögliche Schwankungen im Schleppfehlerverlauf, die noch nicht auf eine Materialbrücke hinweisen, nicht zu einer Fehlermeldung führen.
Es ergibt sich also die Bedingung

$$S < S2 - S1,$$

die erfüllt sein muß, um ein Fehlersignal auszugeben. Dabei werden mit S der vorgebbare Schwellwert, mit S1 der maximale Schleppfehler im Leerlauf und mit S2 der maximale Schleppfehler bei Durchlauf des Kontrollweges bezeichnet.

Entsprechend wird bei Überwachung der Schleppfehlersteigung die Bedingung

$$dS < dS2 - dS1$$

für die Ausgabe eines Fehlersignales aufgestellt, wobei mit dS der vorgebbare Schwellwert, mit dS1 die maximale Schleppfehlersteigung im Leerlauf und mit dS2 die maximale Schleppfehlersteigung bei Durchlauf des Kontrollweges bezeichnet wird.

Um auch Materialreste am Werkstück erkennen zu können, die keine Materialbrücke bilden, kann zusätzlich ein Kontrollweg in -Z-Richtung durchlaufen werden und die Schleppfehler bzw. die Schleppfehlersteigungen im Leerlauf bestimmt werden. In diesem Fall werden Materialreste erkannt, wenn ausgehend von der Ausgangsstellung eine Wegstrecke durchlaufen wird, die der Breite WB des Abstechmeißels entspricht. Ein Unterschied des Schleppfehlers bzw. der Schleppfehlersteigung gegenüber dem Leerlauf darf erst nach Durchlaufen dieser Wegstrecke auftreten. Ein Abweichen der Schleppfehler bzw. der Schleppfehlersteigung an früherer Stelle weist auf Materialreste am Werkstück oder am Rohteil hin, wobei auch hier wieder ein Grenzwert vorgegeben wird, der überschritten werden muß.

**Patentansprüche**

1. Verfahren zur Abstechkontrolle bei CNC-gesteuerten Stangendrehautomaten mit einer Hauptspindel (3) und einer Hilfsspindel (6) und einem abgreifenden Schlitten (WS3), wobei der abgreifende Schlitten (WS3) nach Beendigung des Abstechvorganges entlang eines vorgegebenen Weges von der Hauptspindel entfernt wird **dadurch gekennzeichnet**, daß

- der vorgegebene Weg des abgreifenden Schlittens (WS3) als Kontrollweg dient,

- während der Bewegung des abgreifenden Schlittens (WS3) entlang des Kontrollweges der Schleppfehler überwacht wird,
- der Wert des Schleppfehlers mit einem Wert des Schleppfehlers verglichen wird, der bei der Bewegung des abgreifenden Schlittens entlang des Kontrollweges im Leerlauf ermittelt wurde, und
- bei Überschreiten einer vorgebbaren Differenzschwelle der beiden Schleppfehlerwerte ein Fehlersignal ausgegeben wird.

2. Verfahren nach Anspruch 1, **dadurch gekennzeichnet**, daß
die Schleppfehler im Leerlauf und nach Beendigung des Abstechvorganges während der Beschleunigungsphase des abgreifenden Schlittens bestimmt werden.

3. Verfahren nach Anspruch 1, **dadurch gekennzeichnet**, daß
die Schleppfehler während der statischen Phase der Bewegung des abgreifenden Schlittens entlang des Kontrollweges bestimmt werden.

4. Verfahren nach einem der Ansprüche 1 bis 3, **dadurch gekennzeichnet**, daß
die Schleppfehlersteigung anstelle des Schleppfehlers bestimmt wird und die maximale Schleppfehlersteigung im Leerlauf mit der maximalen Schleppfehlersteigung beim Starten des Kontrollweges verglichen wird und ein Fehlersignal ausgegeben wird, wenn ein vorgegebener Schwellwert der Differenz der maximalen Schleppfehlersteigung beim Starten des Kontrollweges und der Schleppfehlersteigung im Leerlauf überschritten wird.

5. Verfahren nach Anspruch 4, **dadurch gekennzeichnet**, daß
nach Beendigung der Beschleunigungsphase beim Starten des Kontrollweges eine Momentenreduzierung aktiviert wird und bei einer Änderung der Schleppfehlersteigung nach Aktivierung der Momentenreduzierung ein Fehlersignal ausgegeben wird.

6. Verfahren nach einem der Ansprüche 1 bis 5, **dadurch gekennzeichnet**, daß
der Kontrollweg in Richtung des Rohteiles durchfahren wird und der Schleppfehler bzw. die Schleppfehlersteigung bestimmt wird, und daß bei einer Überschreitung eines vorgegebenen Grenzwertes für die Differenz des Schleppfehlers bzw. der Schleppfehlersteigung im Leerlauf und beim Verfahren entlang des Kontrollweges ein Fehlersignal ausgegeben wird.

7. Verfahren nach Anspruch 6, **dadurch gekenn-**

**zeichnet**, daß
Materialreste am abgestochenen Werkstück erkannt werden, wenn der Grenzwert des Schleppfehlers bzw. der Schleppfehlersteigung innerhalb einer Wegstrecke, die der Breite des Abstechwerkzeuges entspricht, überschritten wird.

**Claims**

1. Method of monitoring bar cut-off in CNC-controlled automatic bar lathes with a main spindle (3) and a secondary spindle (6) and a measuring carriage (WS3), said measuring carriage (WS3) being removed along a predetermined path from the main spindle after termination of the bar cut-off procedure,
characterised in that

- the predetermined path of the measuring carriage (WS3) serves as a monitoring path,
- the contouring error is monitored during the movement of the measuring carriage (WS3) along the monitoring path,
- the value of the contouring error is compared with a value of the contouring error which has been detected during the movement of the measuring carriage along the monitoring path in the no-load condition, and
- upon exceeding a determinable differential threshold of the two contouring error values, an error signal is emitted.

2. Method according to claim 1, characterised in that the contouring errors in the no-load condition and after termination of the bar cut-off procedure are determined during the acceleration phase of the measuring carriage.

3. Method according to claim 1, characterised in that the contouring errors are determined during the static phase of the movement of the measuring carriage along the monitoring path.

4. Method according to one of claims 1 to 3, characterised in that the pitch of the contouring error is determined instead of the contouring error, and the maximum pitch of contouring error in the no-load condition is compared with the maximum pitch of contouring error at the start of the monitoring path, and an error signal is emitted when a predetermined threshold value of the difference in the maximum contouring error pitch at the start of the monitoring path and the contouring error pitch in the no-load condition is exceeded.

5. Method according to claim 4, characterised in that, after termination of the accelerating phase upon starting the monitoring path, a reduction of moments is activated and, upon an alteration in the contouring error pitch after activation of the reduction of moments, an error signal is emitted.

**6.** Method according to one of claims 1 to 5, characterised in that the monitoring path is traversed in the direction of the unmachined part, and the contouring error or contouring error pitch is determined, and in that, upon exceeding a predetermined threshold value for the difference of the contouring error or of the contouring error pitch in the no-load condition and during travel along the monitoring path, an error signal is emitted.

**7.** Method according to claim 6, characterised in that residues of material on the cut-off workpiece are recognised, when the threshold value of the contouring error or of the contouring error pitch is exceeded within a path distance corresponding to the width of the cut-off tool.

## Revendications

**1.** Procédé de surveillance du tronçonnage sur des tours automatiques travaillant dans la barre, commandés par commande numérique, avec une broche principale (3), avec une broche secondaire (6) et avec un chariot d'extraction (WS3), le chariot d'extraction (WS3), à la fin de l'opération de tronçonnage, étant éloigné de la broche principale suivant un parcours prédéterminé, caractérisé par le fait que

-   le parcours prédéterminé du chariot d'extraction (WS3) sert de parcours de contrôle,
-   l'on surveille l'erreur de poursuite pendant le déplacement du chariot d'extraction (WS3) le long du parcours de contrôle,
-   l'on compare l'erreur de poursuite à une valeur de l'erreur de poursuite qui a été déterminée au cours du déplacement à vide du chariot d'extraction le long du parcours de contrôle et
-   en cas de dépassement d'un seuil différentiel prédéterminé des deux valeurs des erreurs de poursuite, un signal de défaut est émis.

**2.** Procédé selon la revendication 1, caractérisé par le fait que l'on détermine les erreurs de poursuite à vide et à la fin de l'opération de tronçonnage, pendant la phase d'accélération du chariot d'extraction.

**3.** Procédé selon la revendication 1, caractérisé par le fait que l'on détermine les erreurs de poursuite pendant la phase statique du déplacement du chariot d'extraction le long du parcours de contrôle.

**4.** Procédé selon une des revendications 1 à 3, caractérisé par le fait qu'à la place de l'erreur de poursuite, on détermine la pente de l'erreur de poursuite, que l'on compare la pente maximale de l'erreur de poursuite à vide avec la pente maximale de l'erreur de poursuite au début du parcours de contrôle et qu'un signal d'erreur est émis lorsqu'une valeur seuil pour la différence de la pente maximale de l'erreur de poursuite au début du parcours de poursuite et de la pente maximale de l'erreur de poursuite à vide est dépassée.

**5.** Procédé selon la revendication 4, caractérisé par le fait qu'à la fin de la phase d'accélération, au début du parcours de contrôle, on déclenche une réduction des moments et lors d'une variation de la pente de l'erreur de poursuite après le déclenchement de la réduction des moments, un signal d'erreur est émis.

**6.** Procédé selon une des revendications 1 à 5, caractérisé par le fait que l'on suit le parcours de contrôle en direction de la pièce brute et que l'on détermine l'erreur de poursuite ou la pente de l'erreur de poursuite et par le fait qu'un signal d'erreur est émis en cas de dépassement d'une valeur seuil prédéterminée pour la différence de l'erreur de poursuite ou de la pente de l'erreur de poursuite à vide et lors du déplacement le long du parcours de contrôle.

**7.** Procédé selon la revendication 6, caractérisé par le fait que des restes de matière sur la pièce tronçonnée sont détectés lorsque la valeur seuil de l'erreur de poursuite ou de la pente de l'erreur de poursuite à l'intérieur d'un parcours de déplacement correspondant à la largeur de l'outil à saigner est dépassée.

Fig 1

Schleppfehler [μm]

FIG. 2